# EUROPÄISCHE PATENTSCHRIFT

(11) **EP 0 826 408 B1**
(45) Veröffentlichungstag und Bekanntmachung des Hinweises auf die Patenterteilung: **10.12.2003**
(21) Anmeldenummer: 97111590.2
(22) Anmeldetag: 09.07.1997
(51) Int. Cl.: B01D 53/86, B01J 35/04, B01J 21/06, B01D 53/94

(54) **Verfahren zur reduktiven Zerstörung von Stickstoffoxiden in staubhaltigen Abgasen aus Öfen zur Herstellung von Zement**
Process for reductive elimination of nitrogen oxides from dust-laden exhaust gases of a cement oven
Procédé pour l'élimination réductrice d'oxydes d'azote dans des gaz effluents provenant d'un four pour la fabrication de ciment et contenant des poussières

(30) Priorität: 31.08.1996 DE 19635385
(43) Veröffentlichungstag der Anmeldung: 04.03.1998
(73) Patentinhaber: KWH Katalysatoren GmbH, 45764 Marl (DE)
(72) Erfinder: Werner, Klaus, 44805 Bochum (DE); Bonau, Hugo-Wilhelm, Dr., 48683 Ahaus (DE)
(74) Vertreter: Rohmann, Michael, Dr.

(56) Entgegenhaltungen:
- EP-A- 0 415 145
- EP-A- 0 547 226
- WO-A-97/09112
- DE-A- 2 658 539
- US-A- 4 294 806
- PATENT ABSTRACTS OF JAPAN vol. 003, no. 091 (C-054), 3.August 1979 & JP 54 069587 A (NIPPON SHOKUBAI KAGAKU KOGYO CO LTD), 4.Juni 1979,

## Beschreibung

Die vorliegende Erfindung betrifft ein Verfahren zur reduktiven Zerstörung von Stickstoffoxiden in Abgasen mit einem waben- bzw. zellenförmigen Katalysator, wobei ein titanoxidhaltiger aus monolithischen Katalysatorkörpern bestehender Katalysator eingesetzt wird.

Bei der Verbrennung von Kohlenstoff bzw. von kohlen- sowie kohlenwasserstoffhaltigen Substanzen entstehen neben Kohlendioxid und Wasser unter anderem auch Schwefeloxide und Stickstoffoxide, die eine Umweltbelastung darstellen. In den zurückliegenden Jahren wurde erhebliche Anstrengungen unternommen, die Schwefel- und Stickstoffoxidemissionen zu mindern, unter anderem in Kohlekraftwerken. Zur reduktiven Zerstörung von Stickstoffoxiden in Abgasen haben sich insbesondere waben- bzw. zellenförmige Katalysatoren bewährt. Der zur Stickstoffoxidminderung in Kraftwerken überwiegend eingesetzte Katalysator besteht aus einer Vielzahl einzelner Katalysatorelemente, wobei jedes Element wiederum eine Vielzahl paralleler Kanäle besitzt, deren Achsen alle in Richtung des Gasstromes orientiert sind. Oft sind die Abgase aus den Verbrennungsprozessen mit Staub und Ruß beladen, so dass die Kanäle der Katalysatoren verstopfen, - so wie es aus Kohlekraftwerken bekannt ist, bei denen die katalytische Rauchgasentstickung in sogenannter "High Dust"-Schaltung erfolgt, beispielsweise bei Einsatz eines sogenannten 7,4-Pitch SCR-Katalysators (SCR = selective catalytic reduction) in einem Kohlekraftwerk, dessen Abgas vor SCR-Reaktor rd. 5 g Staub pro m³ i. N. f. enthält.

Auch in anderen Anlagen, in denen Verbrennungsprozesse stattfinden, entstehen Schadstoffe, die eine Abgasreinigung erfordern. In den zurückliegenden Jahren wurde insbesondere die Reinigung der Abgase aus Abfallverbrennungsanlagen vorangetrieben, hier wurden SCR-Maßnahmen aber nur in staubarmen Abgasen durchgeführt. Auch Produktionsbetriebe, beispielsweise Anlagen mit Direktbefeuerung, unterliegen der Verpflichtung zur Reinigung anfallender Abgase, so z. B. Anlagen zur Herstellung von Zement. Das Kernstück einer Anlage zur Zementherstellung ist der Ofen, beispielsweise ein Drehrohrofen oder ein Schachtofen, wobei die Abgase aus dem Ofen und gegebenenfalls nach Grobstaubabscheidung durch einen Multizyklon unter anderem folgende Kenndaten aufweisen können:

| | |
|---|---|
| Staub | ca. 20 bis 250 g/m³ i. N. f. |
| NOx | ca. 600 bis 3000 mg/m³ i. N. f. |
| SO₂ | ca. 400 bis 3000 mg/m³ i. N. f. |
| Temperatur | ca. 150 bis 450 °C |

Ein Verfahren der eingangs genannten Art zur Zerstörung von Stickstoffoxiden in Abgasen ist aus EP 0 415 145 A1 bekannt. Dieses Verfahren ist insbesondere für übliche Abgase mit durchschnittlichen Staubgehalten geeignet. Bei höheren Staubgehalten lässt die Effektivität und Funktionssicherheit der Abgasreinigung zu wünschen übrig.

Es ist bekannt, dass man gemäß der DE-OS 24 58 888 einen Katalysator auf Titandioxidbasis mit weiteren metalloxidischen bzw. sulfatischen Komponenten zur reduktiven Zerstörung von Stickstoffoxiden (nachfolgend kurz Stickoxide genannt) in Gegenwart von molekularem Sauerstoff und Ammoniak bei Temperaturen im Bereich von 150 bis 550 °C und Raumgeschwindigkeiten von 300 bis 100.000 h⁻¹ insbesondere für Abgase in Kraftwerken einsetzen kann. Ein Verfahren zur Herstellung solcher Katalysatoren auf Titanoxidbasis ist beispielsweise auch in der DE-PS 26 58 539 beschrieben.

Die DE-PS 26 58 539 lehrt ein Verfahren zur reduktiven Zerstörung von Stickoxiden in Abgasen mit einem waben- bzw. zellenförmigen Katalysator, wobei der Katalysator aus monolithischen Strukturkörpern besteht, die von parallel zu ihrer Längsachse verlaufenden Kanälen mit waben- bzw. zellenförmigem Querschnitt durchzogen sind, eine offene Frontfläche von mehr als 50 % besitzen und die Kanäle einen hydraulischen Durchmesser größer als 2 mm aufweisen und ferner unter Betriebsbedingungen mit einer Abgasgeschwindigkeit von mehr als 0,5 m/s durchströmt werden. Als Katalysator werden hier Strukturkörper im Wesentlichen aus γ-Al₂O₃, V₂O₅ und Cr₂O₃ auf einem Cordierit-Keramikträger offenbart. Solche Katalysatoren haben sich in SOx-haltigen Abgasen leider nicht bewährt, da durch einen chemischen Abbau insbesondere des Aluminiumoxids der Katalysator zerfällt.

Nun sind für die Minderung der NOx-Gehalte in Abgasen aus Verbrennungsanlagen waben- bzw. zellenförmige Katalysatoren auf Titandioxidbasis als Strukturkörper mit Kanälen (nachfolgend auch kurz Zellen genannt, soweit dies die Querschnittsfläche der Kanäle betrifft), die einen hydraulischen Durchmesser (4a/U = dₕ mit a = lichte Querschnittsfläche einer Zelle im Strukturkörper, U = Umfang der lichten Querschnittsfläche einer Zelle und dₕ = hydraulischer Durchmesser) von rund 3,0 mm, 3,5 mm, 4,1 mm, 5,0 mm, 5,7 mm, 6,0 mm und 6,2 mm besitzen, im Markt, vgl. Dechema Monografien, Vol. 118 (1989) S. 73-80. Diese Katalysatoren bestehen nahezu vollständig aus katalytischem Material, sogenannten Vollkatalysatoren. Seit kurzem werden solche Katalysatoren auf Titandioxidbasis mit sehr hohen V₂O₅-Gehalten (GOMI-Typ) auf dem europäischen Markt als 10,0-Pitch Katalysatoren (10,0 p) angeboten, d. h., dass der kürzeste Abstand von Steg- bzw. Wandmitte zu Wandmitte über eine quadratische Zelle in der Querschnittsfläche eines Strukturkörpers 10,0 mm beträgt, das entspricht bei einer Wandstärke von durchschnittlich 1,4 mm einem hydraulischen Zellendurchmesser von dₕ = 8,5 mm. Aufgrund der hohen V₂O₅ - Gehalte sind jedoch SCR-Katalysatoren vom GOMI-Typ nur für den Einsatz in SO₂-armen Abgasen geeignet.

Marktgängige 7,4 p-Katalysatoren der obengenannten Art (Abstand Stegmitte zu Stegmitte 7,4 mm mit dₕ = 6, 2 mm) als auch 10,0 p-Strukturkörper zeigten bei orientierenden Versuchen zur Zerstörung von Stickoxiden in Abgasen, wie sie bei der Herstellung von Zement hinter Ofen anfallen, eine starke Neigung zu rascher Verstopfung durch den hier vorherrschenden Staub, was unter Produktionsbedingungen zu außerplanmäßigen Abstellungen zwingen würde.

Der Erfindung lag daher die Aufgabe zugrunde, ein Verfahren der eingangs genannten Art anzugeben, das zur Reinigung der Abgase aus Öfen zur Herstellung von Zement eingesetzt werden kann und bei dem die Neigung der Katalysatoren zu Verstopfungen durch den im Abgas enthaltenen Staub reduziert wird und mit dem unerwünschte Beeinträchtigungen der katalytischen Wirksamkeit, beispielsweise durch mechanische Beanspruchungen durch die Staub- bzw. Rußpartikel, effektiv vermieden werden können.

Diese Aufgabe wird durch die Merkmalskombination des Patentanspruches 1 gelöst.

Es wurde nun gefunden, dass waben- bzw. zellenförmige Katalysatoren, die als Hauptbestandteil Titandioxid enthalten und die in Strömungsrichtung verlaufenden Kanäle einen hydraulischen Durchmesser von 9,5 bis 18,0 mm, aufweisen und mit einer Abgasgeschwindigkeit von mehr als 3 m/s i. B., vorzugsweise von 4 bis 20 m/s i. B., besonders vorzugsweise von 5 bis 10 m/s i. B., durchströmt werden, zur reduktiven Zerstörung von Stickoxiden in Abgasen mit Staubgehalten von mehr als 5 g/m³ i. N. f. aus Öfen zur Herstellung von Zement in hervorragender Weise geeignet sind, da sie unter diesen Einsatzbedingungen praktisch kaum noch verstopfen. Das erfindungsgemäße Verfahren wird insbesondere in Abgasen durchgeführt, die aus einem Drehrohrofen stammen.

Beim erfindungsgemäßen Verfahren enthalten die zu reinigenden Abgase vorzugsweise Staub in Mengen von 50 bis 250 g/m³ i. N. f.. Für das Entfernen kleinerer, gelegentlich auftretender Staubansammlungen im SCR-Reaktor oder zur Vorbeugung von Verstopfungen kann beim erfindungsgemäßen Verfahren das sogenannte "Staubblasen" eine zusätzliche Maßnahme darstellen. Zur Vorbeugung von Verstopfungen wird das "Staubblasen" vorzugsweise in bestimmten Zeitintervallen durchgeführt, beispielsweise alle 2 Stunden 1 Minute mit 5 bar Luft.

In der Regel betreibt man das erfindungsgemäße Verfahren unter Zusatz von Ammoniak als Reduktionsmittel, das üblicherweise dem Abgasstrom vor dem SCR-Reaktor beigemischt wird. Die Arbeitstemperatur der titanoxidhaltigen Katalysatoren liegt beim erfindungsgemäßen Verfahren im Allgemeinen bei einer Temperatur im Bereich von 150 bis 450 °C, vorzugsweise bei einer Temperatur im Bereich von 200 bis 450 °C, für SCR-Maßnahmen in hoch SOx-haltigen Abgasen sind insbesondere Temperaturen im Bereich von 250 bis 400 °C bevorzugt.

Der SCR-Reaktor ist in der Regel hinreichend mit waben- bzw. zellenförmigem Katalysator bestückt, so dass bei NOx-Minderungsraten bis zu 98 % die gesetzlich geforderten Grenzwerte gut und auch über einen längeren Zeitraum eingehalten werden können. Ein solcher SCR-Reaktor besteht in der Regel aus mehreren sogenannten Katalysatorlagen oder Katalysatorebenen, wobei eine Lage wiederum aus mehreren Modulen oder Packungen mit viel einzelnen Katalysatorelementen besteht, deren parallel verlaufende Kanäle in Strömungsrichtung orientiert sind und eine Zwangsführung des Abgases durch den Katalysator gewährleisten.

Im Allgemein legt man einem monolithischen Katalysatorkörper eine quadratische Querschnittsfläche mit Außenabmessungen von 150 × 150 mm zugrunde. Die Länge des Katalysators liegt geeigneterweise im Bereich zwischen 400 mm und 1.100 mm und entspricht damit im Allgemeinen der Höhe einer Katalysatorlage. Vorzugsweise besitzen die Zellen in der Querschnittsfläche des Katalysators einen im Wesentlichen quadratischen Querschnitt. Die Zellen des monolithischen Katalysators können in der Querschnittsfläche aber auch eine andere Geometrie besitzen, beispielsweise eine rechteckige oder auch eine sechseckige honigwabenähnliche Form. Geeigneterweise besitzen die Innenwände der Monolithe eine Wandstärke von 1,0 mm bis 1,2 mm. Die Außenwände der monolithischen Katalysatoren besitzen dagegen vorzugsweise eine Wandstärke von 1,0 mm bis 2,5 mm, besonders bevorzugt sind Außenwände mit einer Stärke von 1,0 mm bis 2,0 mm. Für das erfindungsgemäße Verfahren werden solche monolithischen Katalysatoren bevorzugt, bei denen der kürzeste Abstand zwischen zwei Wandmitten über den Querschnitt einer Zelle 8 mm bis 31 mm, besonders vorzugsweise 10 bis 19 mm, ganz besonders vorzugsweise 11 bis 19 mm, beträgt. Ferner besitzen die für das erfindungsgemäße Verfahren bevorzugten Katalysatoren bei einer freien Öffnungsfläche von geeigneterweise 70 bis 85 % auch einen vergleichsweise guten Wert hinsichtlich des Druckverlustes über die Katalysatoren im SCR-Reaktor.

Der für das erfindungsgemäße Verfahren bevorzugte Katalysator enthält als Hauptbestandteil Titandioxid, wobei das Titandioxid oder mindestens eine Vorläuferverbindung des Titandioxids vorzugsweise aus dem Sulfatprozess stammt. Geeigneterweise soll das Titandioxid überwiegend in der Anatas-Form vorliegen. Ferner kann der Katalysator Sulfate enthalten, die sich im Allgemeinen positiv auf seine katalytischen Eigenschaften auswirken. So kann das Sulfat beispielsweise als H₂SO₄, die an ein Oxid angelagert ist, oder als Hydrogensulfat oder als Sulfat eines im Katalysator enthaltenen Metalls vorliegen, beispielsweise des Titans oder Vanadiums oder Wolframs, es kann aber auch beispielsweise als Bariumsulfat gebunden vorliegen. Bevorzugt enthält der für das erfindungsgemäße Verfahren besonders geeignete Katalysator Wolfram- und/oder Molybdän- und/oder Vanadium- und/oder Schwefeloxide. Beim erfindungsgemäßen Verfahren setzt man insbesondere aufgrund der im vorliegenden Abgas hohen SOx-Gehalte einen Katalysator mit weniger als 5 Gew.-% Vanadiumoxid ein. Das für das erfindungsgemäße Verfahren besonders geeignete Katalysatormaterial auf Titanoxidbasis ist vorwiegend porös, dabei liegt das Porenvolumen des Materials im Allgemeinen bei 0,1 bis 0,5 cm³/g und besitzt in der Regel eine BET-Oberfläche von 40 bis 120 m²/g. Um die mechanischen Eigenschaften des Katalysators zu verbessern, kann dieser beispielsweise Glasfasern enthalten.

Im Allgemeinen wird der für das erfindungsgemäße Verfahren eingesetzte monolithische Katalysator aus einer Katalysatormasse auf Basis von Titandioxid sowie weiterer aktiver Komponenten und üblicher Verarbeitungshilfsstoffe durch Extrusion zu einem Formkörper geformt, der Formkörper schonend getrocknet und der Grünkörper in einem Temperaturbereich bis zu 700 °C kalziniert. So erhaltene Katalysatoren können auch nachträglich noch mit weiteren aktiven Komponenten versehen werden, beispielsweise durch eine Tauchimprägnierung und anschließender thermischer Nachbehandlung.

Die sogenannten Stirnflächen der An- bzw. Abströmseite der Katalysatorelemente können zusätzlich gehärtet werden, um dem durch Flugstaub bedingten Abtrag des Katalysatormaterials, auch Abrasion genannt, entgegenzuwirken. Dadurch kann die Standzeit der Katalysatoren nochmals deutlich verlängert werden. Ein solches Härtungsverfahren ist beispielsweise aus der DE-OS 42 29 255 bekannt.

Es ist auch bekannt, dass titanoxidhaltige Katalysatoren, wie sie auch für die reduktive Zerstörung von Stickoxiden in Abgasen aus Verbrennungsanlagen eingesetzt werden, in der Lage sind halogenierte organische Verbindungen, insbesondere chlororganische Verbindungen wie z. B. polychlorierte Dibenzo-p-dioxine, polychlorierte Dibenzofurane sowie andere polychlorierte Kohlenwasserstoffe, abzubauen (VGB-Konferenz "Chemie im Kraftwerk 1993" in Essen - Vortrag K8: "Dioxin-Abbau durch Wabenkatalysatoren"). Auch beim erfindungsgemäßen Verfahren können am Katalysator gleichzeitig Stickoxide und halogenierte organische Verbindungen zerstört werden.

Die Abgase, die beim erfindungsgemäßen Verfahren den SCR-Reaktor verlassen, werden in der Regel nach Staubabscheidung, was beispielsweise mittels Elektrofilter erfolgt, dem Kamin zugeführt. Das Abgas kann aber auch, bevor es über den Kamin gefahren wird, andere an sich bekannte Abgasreinigungsverfahren, z. B. Entschwefelungsverfahren sowie Sorptionsfilterverfahren, durchlaufen.

## Patentansprüche

1. Verfahren zur reduktiven Zerstörung von Stickstoffoxiden in Abgasen mit einem waben- bzw. zellenförmigen Katalysator,
wobei Abgase aus Öfen zur Herstellung von Zement, die Staubgehalte von mehr als 50 g/m³ i. N. f. aufweisen, gereinigt werden,
wobei ein titanoxidhaltiger aus monolithischen Katalysatorkörpern bestehender Katalysator eingesetzt wird, der eine offene Frontfläche von mehr als 50 % besitzt,
wobei die Kanäle des Katalysators einen hydraulischen Durchmesser von 9,5 mm bis 18,0 mm aufweisen,
wobei die Innenwände der Katalysatorkörper eine Wandstärke von 1,0 mm bis 1,5 mm besitzen,
und wobei der Katalysator mit einer Abgasgeschwindigkeit von mehr als 3 m/s i. B. durchströmt wird.

2. Verfahren nach Anspruch 1, wobei der Katalysator mit einer Abgasgeschwindigkeit von 4 bis 20 m/s i. B. durchströmt wird.

3. Verfahren nach einem der Ansprüche 1 oder 2, wobei ein Katalysator mit einer freien Öffnungsfläche zwischen 70 % und 85 % eingesetzt wird.

4. Verfahren nach einem der Ansprüche 1 bis 3, wobei ein Katalysator eingesetzt wird, der neben Titanoxid auch Wolfram- und/oder Molybdän- und/oder Vanadium- und/oder Schwefeloxide enthält.

5. Verfahren nach Anspruch 4, wobei ein Katalysator eingesetzt wird, der weniger als 5 Gew.-% Vanadiumoxid enthält.

6. Verfahren nach einem der Ansprüche 1 bis 5, wobei ein Katalysator eingesetzt wird, dessen Anströmbereich oder dessen Anström- und Abströmbereich gehärtet ist.

7. Verfahren nach einem der Ansprüche 1 bis 6, wobei der Katalysator gleichzeitig für die Zerstörung der Stickstoffoxide und der hallogenierten organischen Verbindungen eingesetzt wird.

## Claims

1. A process for the reductive destruction of nitrogen oxides in flue gases having a catalyst with honeycomb or cellular configuration,
in which flue gases from kilns for cement production with a dust content in excess of 50 g/m³ i. N. f . are cleaned,
in which a catalyst containing titanium oxide and including monolithic catalyst bodies is used having an open frontal surface greater than 50 %,
in which the channels of the catalyst have a hydraulic diameter of 9.5 mm to 18.0 mm,
in which the interior walls of the catalyst body have a wall thickness of 1.0 mm to 1.5 mm,
and in which the rate at which the flue gases flow through the catalyst is greater than 3 m/s i.B.

2. The process according to Claim 1, wherein the rate at which the flue gases flow through the catalyst is from 4 to 20 m/s i.B.

3. The process according to either of Claims 1 or 2, wherein a catalyst having a free opening surface between 70 % and 85 % is used.

4. The process according to any of Claims 1 to 3, wherein a catalyst containing oxides of tungsten and/or molybdenum and/or vanadium and/or sulphur in addition to titanium oxide is used.

5. The process according to Claim 4, wherein a catalyst is used that contains less then 5 % by weight vanadium oxide.

6. The process according to any of Claims 1 to 5, wherein a catalyst is used of which the inflow area or the inflow and outflow area is hardened.

7. The process according to any of Claims 1 to 6, wherein the catalyst is used for the destruction both of nitrogen oxides and of halogenated organic compounds.

## Revendications

1. Procédé pour la destruction réductrice des oxydes d'azote dans les gaz d'échappement à l'aide d'un catalyseur en forme de nid d'abeille ou alvéolaire,
où des gaz d'échappement provenant de fours à ciment et présentant des teneurs en poussières de plus de 50 g/m³ i.N.f. sont épurés,
qui utilise un catalyseur à teneur en oxyde de titane constitué d'un corps de catalyseur monolithique possédant une surface d'ouverture frontale de plus de 50 %,
où les canaux du catalyseur présentent un diamètre hydraulique compris entre 9,5 mm et 18,0 mm,
où les parois intérieures du catalyseur présentent une épaisseur comprise entre 1,0 et 1,5 mm
et où les gaz d'échappement traversent le catalyseur à une vitesse supérieure à 3 m/s i.B.

2. Procédé selon la revendication 1 où les gaz d'échappement traversent le catalyseur à une vitesse comprise entre 4 et 20 m/s i.B.

3. Procédé selon l'une des revendications 1 ou 2 qui utilise un catalyseur ayant une surface d'ouverture libre comprise entre 70 % et 85 %.

4. Procédé selon l'une des revendications 1 à 3 qui utilise un catalyseur qui, outre l'oxyde de titane, comporte également des oxydes de tungstène et / ou de molybdène et /ou de soufre.

5. Procédé selon la revendication 4 qui utilise un catalyseur dont la teneur en oxyde de vanadium est inférieure à 5 % en masse.

6. Procédé selon l'une des revendications 1 à 5 qui utilise un catalyseur dont la zone d'entrée des gaz ou la zone d'entrée et la zone de sortie des gaz sont trempées.

7. Procédé selon l'une des revendications 1 à 6 où le catalyseur est en même temps utilisé pour la destruction des oxydes d'azote et des composés organiques halogénés.
